# EUROPÄISCHE PATENTSCHRIFT

(11) **EP 0 933 162 B1**
(45) Veröffentlichungstag und Bekanntmachung des Hinweises auf die Patenterteilung: **06.09.2006**
(21) Anmeldenummer: 98123879.3
(22) Anmeldetag: 16.12.1998
(51) Int. Cl.: B23Q 1/01, B23Q 39/04, B23Q 7/03

(54) **Werkzeugmaschine**
Machine tool
Machine-outil

(30) Priorität: 30.01.1998 DE 19803563
(43) Veröffentlichungstag der Anmeldung: 04.08.1999
(73) Patentinhaber: J.G. Weisser Söhne Werkzeugmaschinenfabrik GmbH & Co. KG, 78112 St. Georgen (DE)
(72) Erfinder: Hammer, Eberhard, 78739 Hardt (DE)
(74) Vertreter: Patentanwälte Westphal, Mussgnug & Partner

(56) Entgegenhaltungen:
- EP-A- 0 583 085
- US-A- 4 998 442

## Beschreibung

Die Erfindung betrifft eine Werkzeugmaschine, insbesondere eine Drehmaschine.

Aus der DE 34 16 660 C2 ist eine Drehmaschine bekannt, bei welcher die Arbeitsspindel vertikal angeordnet ist und in vertikaler Z-Richtung an einem X-Schlitten geführt ist. Der X-Schlitten ist in horizonaler Richtung verfahrbar. Die Werkzeuge sind unter der hängenden Arbeitsspindel angeordnet. Die X-Führungen sind an der vertikalen Stirnwand eines Maschinenständers angebracht. Durch die horizontale Bewegung in X-Richtung und die Vertikalbewegung in Z-Richtung kann die Arbeitsspindel zwischen einer Be- und Entladestation und der Bearbeitungsstation verfahren werden, so daß die Werkstücke durch die Arbeitsspindel selbst in der Be- und Entladestation aufgenommen und abgegeben werden können (sogenanntes Pick-up-Prinzip). Die Anordnung der X-Führung an der vertikalen Stirnwand des Maschinenständers schränkt die Freiheit dieses Werkzeugmaschinen-Konzeptes in bezug auf die Y-Achse ein.

Aus der DE 196 51 474 A1 ist ein ähnliches Werkzeugmaschinen-Konzept bekannt, wobei jedoch die Arbeitsspindel mit horizontaler Achse an dem in vertikaler Richtung verfahrbaren Schlitten angeordnet ist. Auch hier sind die X-Führungen an vertikalen Stirnwänden des Maschinenständers angeordnet, so daß sich entsprechende Beschränkungen ergeben.

Der Erfindung liegt die Aufgabe zugrunde, ein Werkzeugmaschinen-Konzept zur Verfügung zu stellen, welches eine große Freiheit in den drei Bewegungsachsen und eine hohe Flexibilität in der Anpassung an unterschiedliche Bearbeitungsaufgaben miteinander vereinigt.

Diese Aufgabe wird erfindungsgemäß gelöst durch eine Werkzeugmaschine mit den Merkmalen des Anspruchs 1.

Vorteilhafte Ausführungen und Weiterbildungen der Erfindung sind in den Unteransprüchen angegeben.

Die erfindungsgemäße Werkzeugmaschine basiert auf dem Konzept, den Maschinenständer mit einem von vier Ständersäulen getragenen horizontalen Ständeroberteil auszubilden, an dessen Unterseite Y-Schlitten und Z-Schlitten hängend angeordnet sind. Die Arbeitsspindel ist horizontal und hängend an dem Z-Schlitten angebracht. Die X-Achse ist von der Y-Achse und der Z-Achse vollständig getrennt und wird durch an dem Maschinenständer geführte X-Schlitten realisiert.

Die hängende Anordnung der Y- und Z-Schlitten an der Unterseite des dachförmigen Ständeroberteils, welches nur an den vier Ecken durch die Ständersäulen getragen wird, ermöglicht, daß die Werkzeugmaschine an allen vier Seiten offen gebaut werden kann. Dadurch ist eine große Freiheit in der Bewegung der Arbeitsspindel in den horizontalen Z- und Y-Richtungen möglich. Der Hubweg in diesen horizontalen Richtungen wird durch keine Maschinenständer-Teile eingeschränkt. Insbesondere ist es auch möglich, die Arbeitsspindel bis an die Außenkante des Ständeroberteils zu verfahren, wobei auch Teile des Spindelstockes durch die offenen Seiten über die Außenkontur des Maschinenständers hinausragen können. Auch bei großen horizontalen Hubwegen in Y-Richtung und Z-Richtung ist ein kompakter platzsparender Aufbau des Maschinenständers und damit der gesamten Werkzeugmaschine möglich.

Die durch die hängende Anordnung der Y-Achse und der Z-Achse an dem Ständeroberteil gegebene Möglichkeit, die Werkzeugmaschine an allen vier Seitenflächen offen zu gestalten, ergibt weiter eine hohe Flexibilität in der Gestaltung der Werkzeugmaschine und in der Anpassung an unterschiedliche Bearbeitungsaufgaben. Insbesondere können Werkstückzuführung und - abführung mit großer konstruktiver Freiheit gestaltet werden. Auch die Zugänglichkeit des Arbeitsraumes für die Bedienungspersonen kann mit entsprechend großer Freiheit gestaltet werden.

Das Werkzeugmaschinen-Konzept läßt eine vielseitige variable Gestaltung der Werkzeugmaschine in einem Baukastensystem zu. In dem Werkzeugmaschinen-Konzept können unterschiedliche Maschinenbaugruppen kombiniert und integriert werden. Die horizontale Arbeitsspindel ermöglicht die Ausgestaltung als Horizontaldrehmaschine für die unterschiedlichsten Drehaufgaben bis hin zu einer Werkstückkomplettbearbeitung. Die horizontale Arbeitsspindel kann auch als Frässpindel oder Bohrspindel gestaltet werden. Für die Drehbearbeitung ist es weiter möglich, an dem Z-Schlitten bei Bedarf Reitstöcke und ggf. Lünetten anzubringen.

Die Y-Bewegung kann aufgrund des möglichen Hubweges dazu verwendet werden, vorzugsweise in einem Eilgang in eine seitliche Be- und Entladezone zu verfahren, so daß in einem Pick-up-System die Werkstücke in die Arbeitsposition transportiert und nach der Bearbeitung wieder abgegeben werden können. Dadurch können aufwendige Ladevorrichtungen eingespart werden.

Wird der Y-Hub nur für den Belade- und Entladevorgang verwendet, so genügt für den Y-Vorschub ein einfacher Hydraulikantrieb mit Endlagenpositionierung. Die Y-Achse kann jedoch auch als NC-Achse ausgebildet sein, so daß in Verbindung mit der NC-gesteuerten Z-Achse und X-Achse eine vielseitige Komplettbearbeitung in nahezu allen Zerspanungstechniken möglich ist.

Die symmetrische Anordnung der Schlittenführungen der Y-Achse und der Z-Achse an dem Ständeroberteil und die symmetrische Abstützung dieses Ständeroberteils ergeben eine hohe Systemsteifigkeit und damit eine hohe Bearbeitungspräzision.

Durch die getrennte Anordnung des X-Schlittens unten am Maschinenständer beeinträchtigt dieser die Zugänglichkeit und Variabilität sowie den kompakten Aufbau der Werkzeugmaschine nicht. Die hängende Anordnung von Y-Schlitten, Z-Schlitten und Arbeitsspindel ermöglicht einen freien Spänefall nach unten, wobei eine einfache zuverlässige Abdichtung des X-Schlittens möglich ist.

Die Ausgestaltung der Werkzeugmaschine kann flexibel an die unterschiedlichsten Bearbeitungsaufgaben angepaßt werden. Die Werkzeugmaschine kann mit einer oder mehreren Arbeitsspindeln ausgestattet sein. Sind mehrere Arbeitsspindeln vorgesehen, so können an den Arbeitsspindeln gespannte Werkstücke gleichzeitig identisch bearbeitet werden. Es ist auch möglich, die Werkstücke von einer Arbeitsspindel zur nächsten zu übergeben und an den einzelnen Arbeitsspindeln unterschiedliche Bearbeitungsvorgänge durchzuführen. Sind mehrere Arbeitsspindeln vorhanden, so können diese an einem gemeinsamen Y-Schlitten angeordnet sein oder getrennte X-Schlitten aufweisen. Auch die Zahl der X-Schlitten variieren. Im einfachsten Falle ist nur ein X-Schlitten vorgesehen. Weist die Werkzeugmaschine jedoch zwei oder mehr Arbeitsspindeln auf, so sind vorzugsweise auch wenigstens zwei X-Schlitten vorgesehen, um die Werkstücke in der Aufspannung an den Arbeitsspindeln gleichzeitig bearbeiten zu können. Sind die Arbeitsspindeln einander gegenüber angeordnet, so ergibt sich eine besonders einfache Übergabemöglichkeit für das Werkstück von der Aufspannung an einer Arbeitsspindel zu der Aufspannung an der anderen Arbeitsspindel. Es können auch jeweils zwei Arbeitsspindeln parallel nebeneinander an einem gemeinsamen Y-Schlitten angeordnet sein, um zwei Werkstücke parallel in identischer Weise zu bearbeiten oder um die beiden Werkstücke nacheinander durch das selbe Werkzeug zu bearbeiten. Werden zwei Werkstücke parallel an zwei nebeneinander angeordneten Arbeitsspindeln bearbeitet, so kann ein gemeinsamer Z-Schlitten den Z-Hub für beide Arbeitsspindeln und ein gemeinsamer X-Schlitten den X-Hub für beide Werkzeuge bewirken. Um Unterschiede in der Bearbeitung, z. B. in Folge unterschiedlichen Werkzeugverschleißes oder dergleichen verhindern zu können, ist in diesem Falle jedoch vorzugsweise noch jeweils ein Z-Korrekturhub und ein X-Korrekturhub vorhanden, um die Unterschiede im Arbeitshub für die parallel bearbeiteten Werkzeuge ausgleichen zu können

Die vielfältige Gestaltungsmöglichkeit und die große Freiheit in der Zugänglichkeit erlauben ein einfaches Handling der Werkstücke, welches sich insbesondere auch für eine Automatisierung der Arbeitsabläufe eignet.

Im folgenden wird die Erfindung anhand von in der Zeichnung dargestellten Ausführungsbeispielen näher erläutert. Es zeigen:
- Figur 1 a,b,c: eine erste Ausführung der Werkzeugmaschine in Frontansicht (a), Seitenansicht (b) und Draufsicht (c),
- Figur 2 a,b,c: eine zweite Ausführung der Werkzeugmaschine in Frontansicht (a), Seitenansicht (b) und Draufsicht (c),
- Figur 3 a,b,c: eine dritte Ausführung der Werkzeugmaschine in Frontansicht (a), Seitenansicht (b) und Draufsicht (c),
- Figur 4 a,b,c: eine vierte Ausführung der Werkzeugmaschine in Frontansicht (a), Seitenansicht (b) und Draufsicht (c),
- Figur 5 a,b,c: eine fünfte Ausführung der Werkzeugmaschine in Frontansicht (a), Seitenansicht (b) und Draufsicht (c),
- Figur 6 a,b,c: eine sechste Ausführung der Werkzeugmaschine in Frontansicht (a), Seitenansicht (b) und Draufsicht (c) und
- Figur 7 a,b,c: eine siebte Ausführung der Werkzeugmaschine in Frontansicht (a), Seitenansicht (b) und Draufsicht (c).

Die Werkzeugmaschine weist einen gegossenen Maschinenständer auf, z.B. aus Gußeisen oder Polymerbeton. Der Maschinenständer besteht aus einem im wesentlichen quaderförmigen Ständerunterteil 10, an dessen vier Ecken vertikale Ständersäulen 12 angegossen sind. Oben auf die Ständersäulen 12 ist ein Ständeroberteil 14 aufgesetzt und mit den Ständersäulen 12 verschraubt. Das Ständeroberteil 14 überdeckt dachförmig die gesamte Fläche des Maschinenständers. Die Unterseite des Ständeroberteils 14 ist als horizontale ebene Platte 16 ausgebildet, an deren Oberseite Versteifungsrippen 18 angeformt sind. Da das Ständeroberteil 14 nur an den vier Ecken durch die Ständersäulen 12 abgestützt ist, ist der Maschineninnenraum zwischen dem Ständerunterteil 10 und dem Ständeroberteil 14 von allen vier Seiten frei zugänglich.

Das Ständerunterteil 10 weist einen bodenseitig in Längsrichtung durchgehenden Tunnel 20 auf, in welchen ein Späneförderer 22 eingeschoben werden kann. In dem mittleren als Arbeitsraum dienenden Bereich des Maschinenständers ist in dem Ständerunterteil 10 ein Späneschacht 24 ausgebildet, der für den freien Spänefall vertikal nach unten in den Tunnel 20 mündet.

An der Unterseite des Ständeroberteils 14 sind horizontal verlaufende Y-Führungen 26 angebracht, an welchen hängend Y-Schlitten 28 verfahrbar sind. An der Unterseite der Y-Schlitten 28 sind horizontal verlaufende Z-Führungen 30 angebracht, die rechtwinklig zu den Y-Führungen 26 verlaufen. An den Z-Führungen 30 sind hängend Z-Schlitten 32 verfahrbar, die eine horizontale Arbeitsspindel 34 mit deren Antriebsmotor 36 tragen.

Im Ständerunterteil 10 sind vertikale X-Führungen 38 angeordnet, auf welchen X-Schlitten 40 vertikal verfahrbar sind.

Dieses allgemeine Werkzeugmaschinen-Konzept kann in vielfältiger Weise flexibel im Baukastensystem mit an sich bekannten Maschinenbaugruppen komplettiert werden. Dadurch lassen sich mit einem einheitlichen Maschinenständer und Maschinenkonzept Werkzeugmaschinen für die unterschiedlichsten Bearbeitungsaufgaben herstellen. Nachfolgend werden hierzu einige Beispiele beschrieben und erläutert.

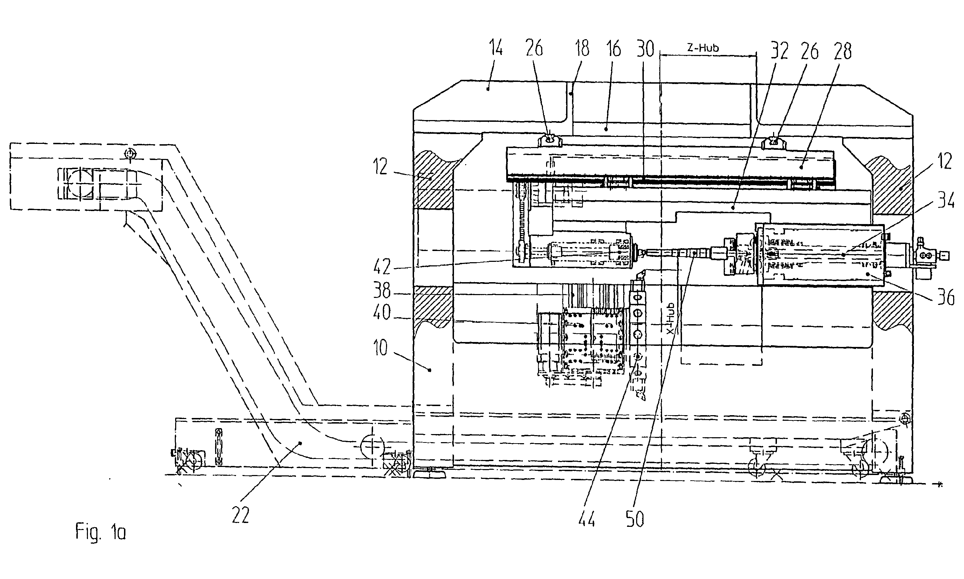

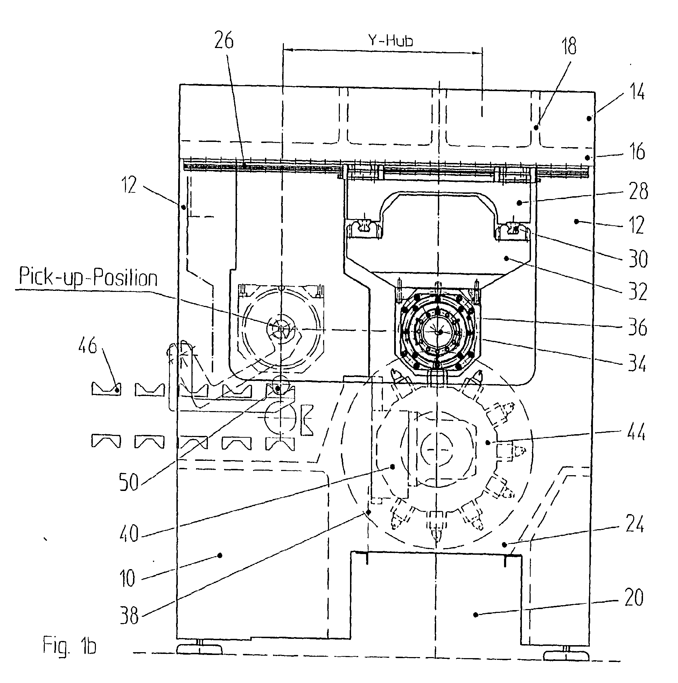

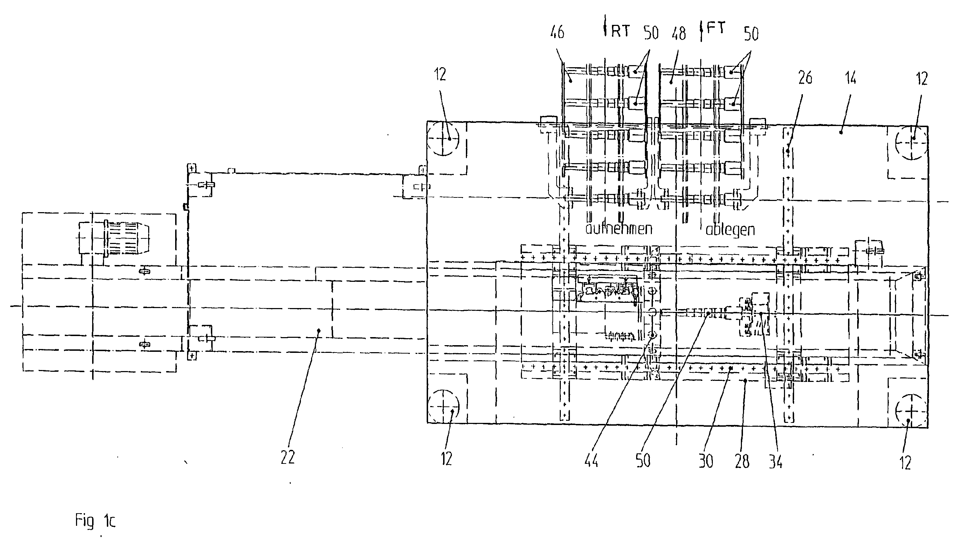

Die Figuren 1 a,b,c zeigen eine Ausführung der Werkzeugmaschine zum Drehen von wellenförmigen Werkstücken.

An der Unterseite des Ständeroberteils 14 ist eine über die gesamte Breite durchgehende, aus zwei Profilschienen bestehende Y-Führung 26 angebracht. An der Y-Führung 26 ist mittels Wälzlagern hängend ein Y-Schlitten 28 angeordnet, der an seiner Unterseite eine unter 90° zu der Y-Führung 26 verlaufende Z-Führung 30 trägt, die aus zwei parallelen Profilschienen besteht. An der Z-Führung 30 ist ein Z-Schlitten 32 verfahrbar gelagert, dessen Länge im wesentlichen der Breite des Y-Schlittens 28 entspricht. Unten an dem Z-Schlitten 32 ist hängend an einem Ende eine horizontale Arbeitsspindel 34 mit einem Antriebsmotor 36 gelagert. An dem entgegengesetzten Ende des Z-Schlittens 32 ist ein Reitstock 42 gelagert, dessen Achse mit der Achse der Arbeitsspindel 34 fluchtet.

An dem Ständerunterteil 10 ist in einer X-Führung 38 vertikal verfahrbar ein X-Schlitten 40 gelagert, der einen Werkzeugrevolver 44 mit horizontaler Revolverachse trägt. Der Werkzeugrevolver 44 trägt an seinem Umfang Drehwerkzeuge.

Hinter dem Arbeitsraum, unter welchem sich der Späneschacht 24 und in welchem sich der Werkzeugrevolver 44 befinden, ist eine Be- und Entladestation in dem Maschinenständer vorgesehen. Durch die offene Rückseite des Maschinenständers führen zwei Transportbahnen 46 und 48 in die Be- und Entladestation. Die Transportbahnen 46 und 48 laufen horizontal, rechtwinklig zur Achse der Arbeitsspindel 34 und sind in Richtung dieser Achse parallel gegeneinander versetzt. Die Werkzeugmaschine der Figur 1 arbeitet in folgender Weise:
Werkstück-Rohteile werden in Aufnahmeprismen der Transportbahn 46 der Werkzeugmaschine zugeführt. Der Z-Schlitten 32 wird mittels eines NC-gesteuerten Antriebs in Z-Richtung verfahren, so daß die Arbeitsspindel 34 und der Reitstock 42 in die der Transportbahn 46 entsprechende Z-Position kommen. Der Y-Schlitten 28 wird über einen Hydraulikantrieb um den in Figur 1 b gekennzeichneten Y-Hub verfahren, so daß die Arbeitsspindel 34 und der Reitstock 42 sich in der Beladeposition über der Transportbahn 46 befinden. Ein Werkstück-Rohteil wird durch eine Hebeeinrichtung von der Transportbahn 46 aufgenommen und zwischen Arbeitsspindel 34 und Reitstock 42 gehoben. Nach dem Spannen des Rohteils zwischen der Arbeitsspindel 34 und dem Reitstock 42 fährt der Y-Schlitten 28 zurück in die Arbeitsposition. Der Antriebsmotor 36 treibt die Arbeitsspindel 34 und das Werkstück 50 an, das Werkstück wird durch das Drehwerkzeug des Werkzeugrevolvers 44 bearbeitet, wobei der Z-Vorschub durch eine NC-Steuerung des Z-Schlittens 32 und der X-Vorschub durch eine NC-Steuerung des X-Schlittens 40 erfolgt. Sobald das Werkstück 50 fertig bearbeitet ist, wird der Z-Schlitten 32 in die Z-Position der zweiten Transportbahn 48 gebracht. Der Y-Schlitten 28 führt den in Figur 1b eingezeichneten Y-Hub aus, so daß das Werkstück 50 in die Entladeposition über der Transportbahn 48 gelangt. Das Werkstück 50 kann auf die Transportbahn 48 abgelegt und abgeführt werden.

Die Zuführung der Werkstücke 50 durch die Transportbahn 46 und die Abführung der Werkstücke 50 durch die Transportbahn 48 erfolgen von der Rückseite des Maschinenständers. Die Bedienungsperson hat von der gegenüberliegenden Frontseite des Maschinenständers freien Zugang und freien Einblick in den Arbeitsraum. Die Versorgungsleitungen für den Antrieb der Schlitten und der Arbeitsspindel sowie für Kühl- und Schmiermittel usw. können durch die offenen rechten und linken Seiten zugeführt werden. Die gesamte Grundfläche des Maschinenständers kann für den Y-Hub und den Z-Hub ausgenützt werden, so daß sich ein kompakter Maschinenaufbau mit einem günstigen Verhältnis von Grundflächenbedarf und Verfahrweg ergibt. Die Breite des Maschinenständers kann für den Y-Hub ausgenützt werden, so daß Be- und Entladestation und Arbeitsraum optimal in den Maschinenständer integriert werden können. Wie Figur 1a zeigt, ist eine vollständige Ausnützung der Länge des Maschinenständers für den Z-Hub möglich. Dies ist dadurch bedingt, daß der Antriebsmotor 36 bei der Bewegung des Z-Schlittens in die in Figur 1a rechte Endstellung durch die offene Seite des Maschinenständers hinausfahren kann.

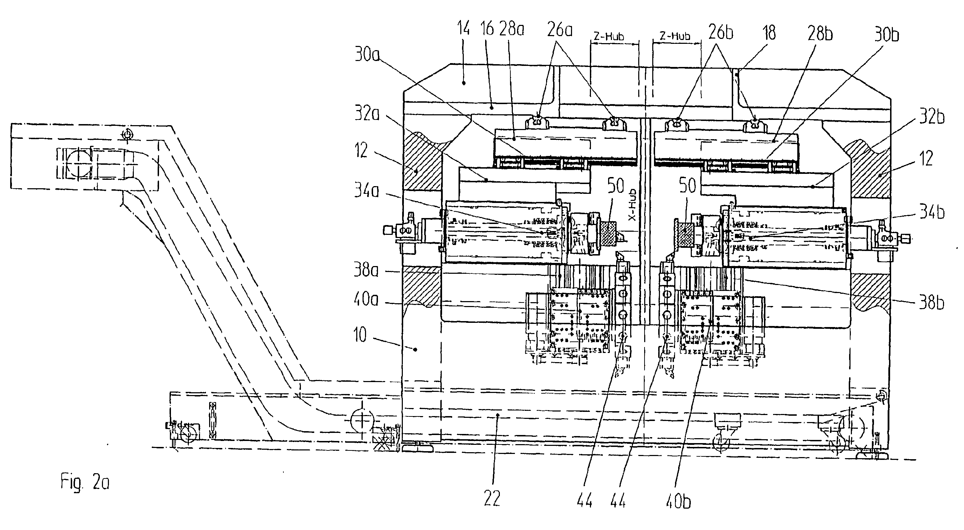

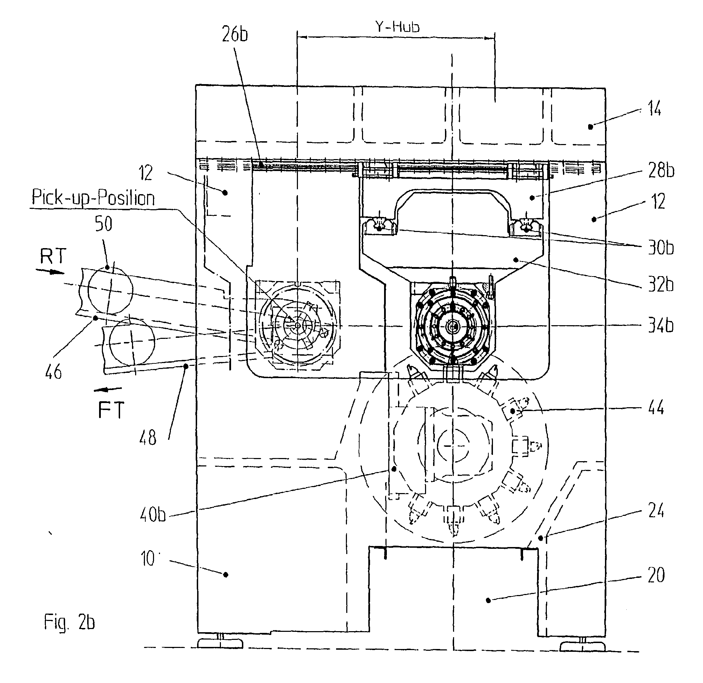

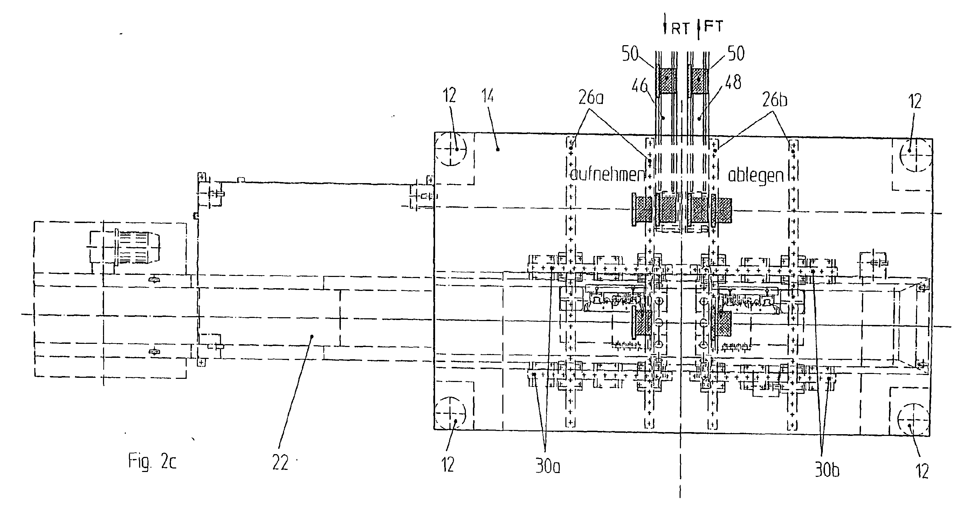

Die Figuren 2 a,b,c zeigen eine Ausbildung der Werkzeugmaschine zum Drehen von kurzen flanschförmigen Werkstücken 50 in zwei Aufspannungen.

Soweit Übereinstimmung mit der vorstehenden Beschreibung besteht, wird auf diese Bezug genommen.

Bei der Ausbildung der Werkzeugmaschine gemäß Figur 2 sind an der Unterseite des Ständeroberteils 14 zwei Y-Führungen 26a und 26b angebracht, die parallel zueinander verlaufen und in Z-Richtung gegeneinander versetzt sind. Jede der Y-Führungen 26a, 26b trägt einen Y-Schlitten 28a bzw. 28b. An den Y-Schlitten 28a und 28b ist jeweils ein Z-Schlitten 32a bzw. 32b mit einer horizontalen Arbeitsspindel 34a bzw. 34b angeordnet. Im Ständerunterteil 10 sind zwei X-Führungen 38a und 38b mit jeweils einem X-Schlitten 40a bzw. 40b angeordnet, die Werkzeugrevolver 44 tragen.

Der Bearbeitungsposition der Arbeitsspindel 34a und des X-Schlittens 40a ist eine als Zulaufrinne ausgebildete Transportbahn 46 der Be- und Entladestation zugeordnet, während eine als Ablaufrinne ausgebildete Transportbahn 48 der Arbeitsposition der zweiten Arbeitsspindel 34b und des X-Schlittens 40b zugeordnet ist.

Die Arbeitsweise der Werkzeugmaschine in der Ausführung der Figur 2 ist folgende:
Werkstück-Rohteile 50 werden über die Transportbahn 46 zugeführt und in die Beladeposition in dem Maschinenständer gebracht. Die Arbeitsspindel 34a wird mittels des Y-Schlittens 28a und des Z-Schlittens 32a in die Beladeposition verfahren, so daß das Werkstück 50 aufgenommen und an der Arbeitsspindel 34a gespannt werden kann. Die Arbeitsspindel 34a wird dann in die Arbeitsposition an den Werkzeugrevolver 44 des X-Schlittens 40a gefahren. Durch Antrieb der Arbeitsspindel 34a und NC-Steuerung des Z-Hubes des Z-Schlittens 32a und des X-Hubes des X-Schlittens 40a wird das Werkstück 50 von einer Endseite her bearbeitet.

Nach Beendigung dieser ersten Drehbearbeitung werden die Arbeitsspindeln 34a und 34b fluchtend aufeinander ausgerichtet und mittels der Z-Schlitten 32a und 32b gegeneinander bewegt, so daß das Werkstück 50 von der ersten Aufspannung in der Arbeitsspindel 34a in die zweite Aufspannung in der Arbeitsspindel 34b übergeben werden kann. Nun erfolgt die zweite Drehbearbeitung des zweiten Endes des Werkstückes 50 durch NC-Steuerung des Z-Schlittens 32b und des X-Schlittens 40b. Ist die zweite Drehbearbeitung abgeschlossen, so wird das fertig bearbeitete Werkstück 50 mittels des Z-Schlittens 32b und des Y-Schlittens 28b in die Entladeposition gebracht und auf die abführende Transportbahn 48 abgelegt.

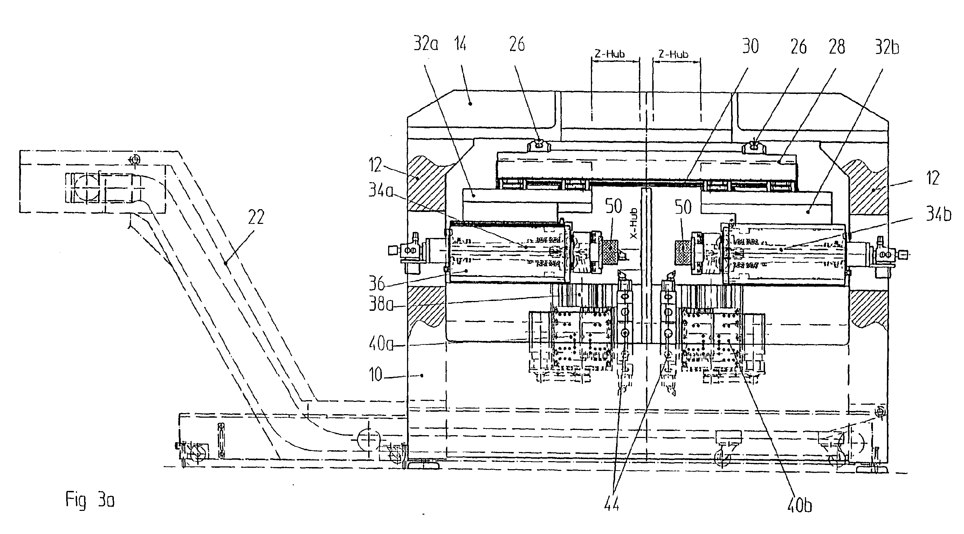

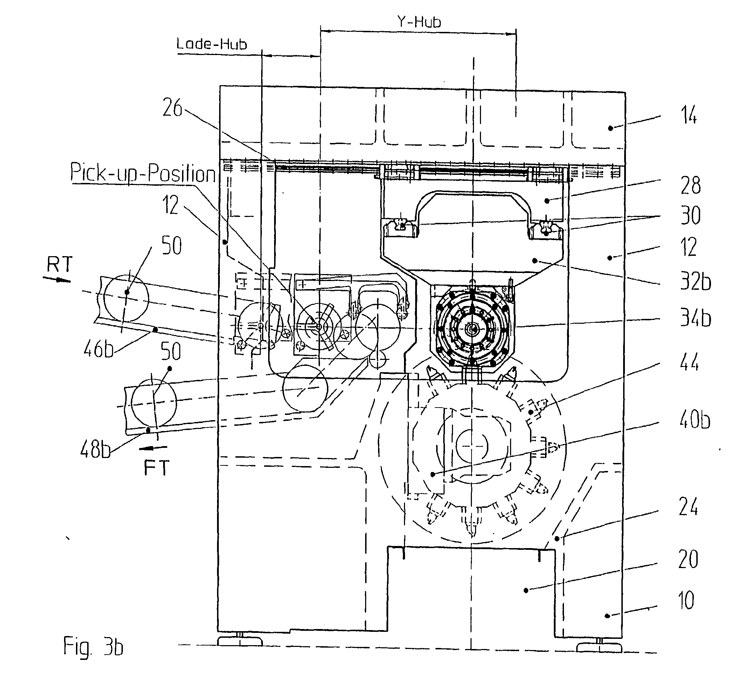

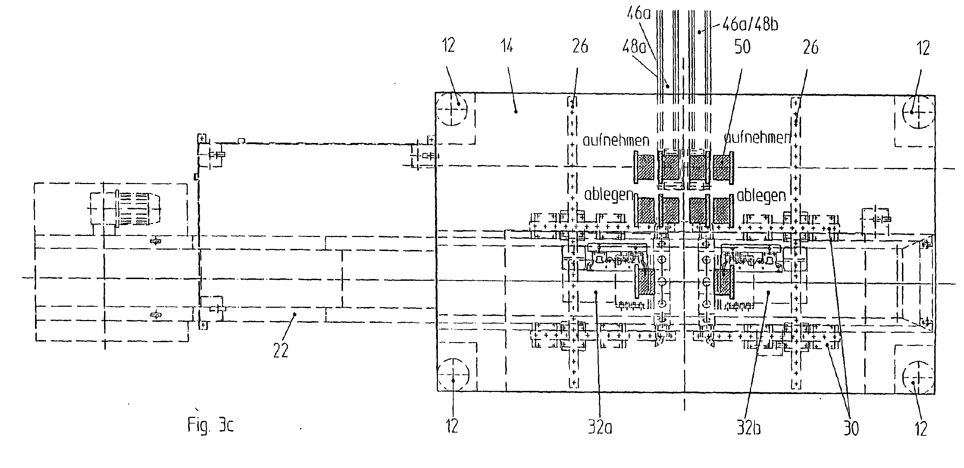

Die Figuren 3 a,b,c zeigen eine dritte Ausführung, die zur parallelen vorzugsweise identischen Drehbearbeitung von zwei Werkstücken dient.

In dieser Ausführung weist das Ständeroberteil 14 nur eine Y-Führung 26 mit einem Y-Schlitten 28 auf. An der Unterseite des Y-Schlittens 28 ist eine Z-Führung 30 angebracht, an der jedoch zwei Z-Schlitten 32a und 32b hängend geführt sind. Jeder der Z-Schlitten 32a, 32b trägt eine Arbeitsspindel 34a bzw. 34b. Beiden Arbeitsspindeln 34a und 34b ist jeweils ein X-Schlitten 40a bzw. 40b mit einem Werkzeugrevolver 44 zugeordnet.

Zum Zuführen und Abführen der Werkstücke 50 führen zwei als Zulaufrinnen ausgebildete Transportbahnen 46a und 46b in die Be- und Entladestation und zwei als Ablaufrinnen ausgebildete Transportbahnen 48a und 48b führen die fertig bearbeiteten Werkstücke ab. Die Transportbahnen 46a und 48a verlaufen parallel übereinander in einer der Bearbeitungsposition der Arbeitsspindel 34a entsprechenden Z-Position. Die Transportbahnen 46b und 48b verlaufen parallel übereinander in einer der Bearbeitungsposition der Arbeitsspindel 34b entsprechenden Z-Position. Wie aus den Figuren 3b und 3c ersichtlich ist, weisen die Transportbahnen 46a und 48a sowie die Transportbahnen 46b und 48b jeweils Übergabepositionen auf, die in Y-Richtung gegeneinander versetzt sind.

Die Werkzeugmaschine der Figur 3 arbeitet in folgender Weise:
Der Y-Schlitten 28 wird in Y-Richtung verfahren bis in die in Figur 3b mit "Ladehub" gekennzeichnete Übergabeposition der zuführenden Transportbahn 46a bzw. 46b. In dieser Position werden über die Transportbahnen 46a und 46b zugeführte Werkstück-Rohteile 50 übergeben und an den Arbeitsspindeln 34a und 34b gespannt. Dann wird der Y-Schlitten 28 in die Arbeitsposition verfahren. Die an den Arbeitsspindeln 34a und 34b gespannten Werkstücke 50 werden gleichzeitig gedreht, indem die Z-Schlitten 32a und 32b und die X-Schlitten 40a und 40b NC-gesteuert verfahren werden. Wenn die Werkstücke 50 fertig bearbeitet sind, wird der Y-Schlitten 28 wieder in die Be- und Entladestation verfahren, so daß die Arbeitsspindel 34a und 34b mit den Werkstücken 50 über die Übergabeposition der jeweils abführenden Transportbahnen 48a bzw. 48b gelangen, so daß die fertig bearbeiteten Werkstücke 50 auf diesen Transportbahnen 48a bzw. 48b abgelegt werden können.

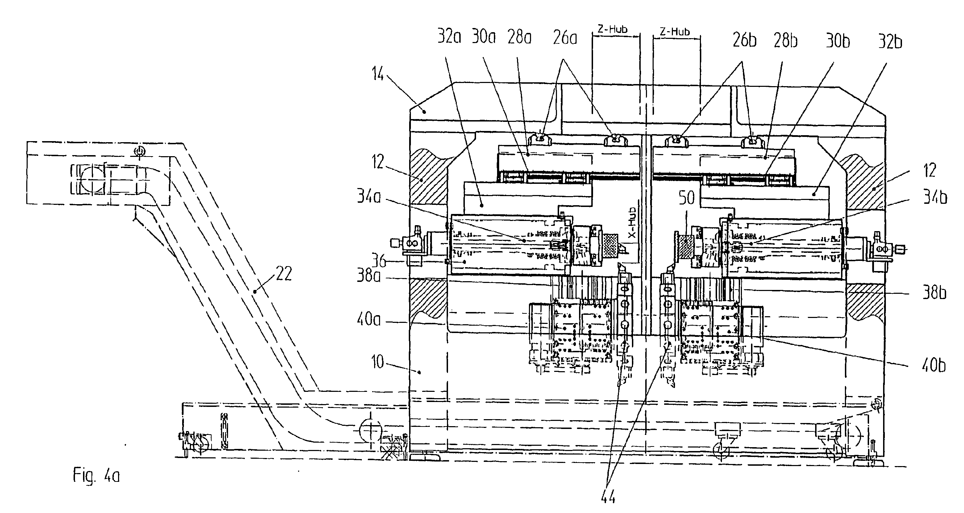

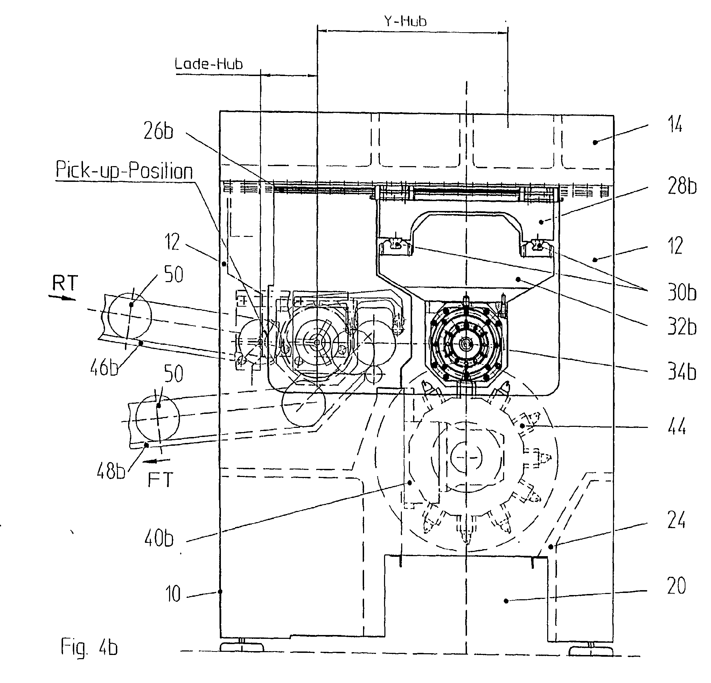

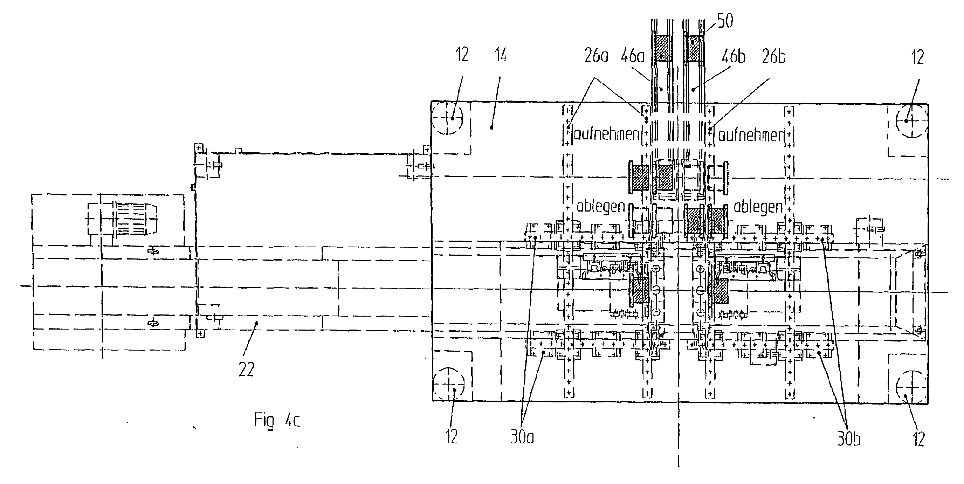

In Figur 4 a,b,c ist eine vierte Ausführung der Werkzeugmaschine gezeigt, bei welcher zwei flanschartige Werkstücke parallel in zwei Aufspannungen bearbeitet werden können.

In dieser Ausführung weist die Werkzeugmaschine an dem Ständeroberteil 14 zwei Y-Führungen 26a und 26b mit Y-Schlitten 28a und 28b auf. Jeder der Y-Schlitten 28a und 28b führt einen Z-Schlitten 32a bzw. 32b. Die Drehbearbeitung erfolgt durch Arbeitsspindeln 34a und 34b sowie X-Schlitten 40a und 40b mit jeweiligen Werkzeugrevolvern 44.

Zur Be- und Entladestation führen Transportbahnen 46a und 46b, während Transportbahnen 48a und 48b von der Be- und Entladestation wegführen. Die Transportbahnen 46a, 46b, 48a, 48b entsprechen der in Figur 3 beschriebenen Ausführung.

Sollen an beiden Arbeitsspindeln 34a und 34b parallel Werkstücke identisch bearbeitet werden, so arbeitet die Werkzeugmaschine in derselben Weise, wie dies anhand des Ausführungsbeispiels der Figur 3 erläutert ist. Sollen Werkstücke in zwei Aufspannungen bearbeitet werden, so werden die Werkstück-Rohteile über die zuführende Transportbahn 46a zugeführt und von der ersten Arbeitsspindel 34a aufgenommen und in erster Aufspannung bearbeitet. Nach der ersten Bearbeitung an der Arbeitsspindel 34a werden die Werkstücke an die zweite Arbeitsspindel 34b übergeben, wie dies anhand des Ausführungsbeispiels der Figur 2 beschrieben ist, und dort in der zweiten Aufspannung gedreht. Nach Beendigung der zweiten Drehbearbeitung gibt die Arbeitsspindel 34b die fertig bearbeiteten Werkstücke 50 an die der zweiten Arbeitsspindel 34b zugeordnete abführende Transportbahn 48b ab.

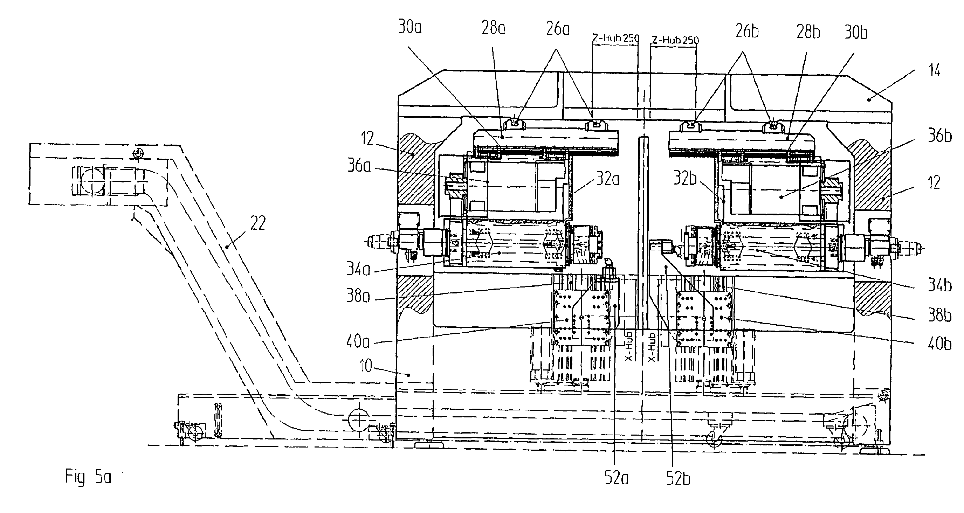

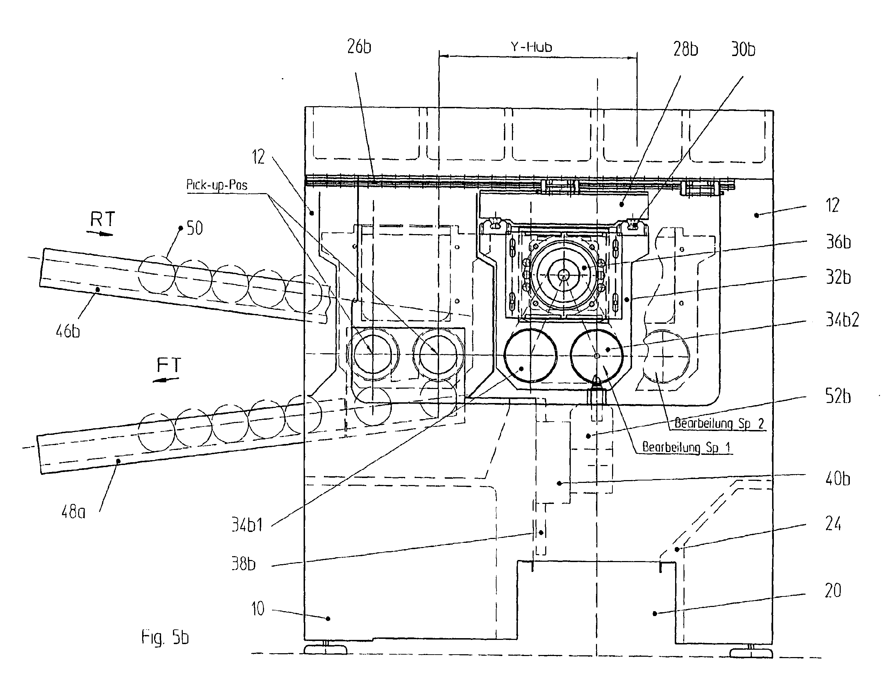

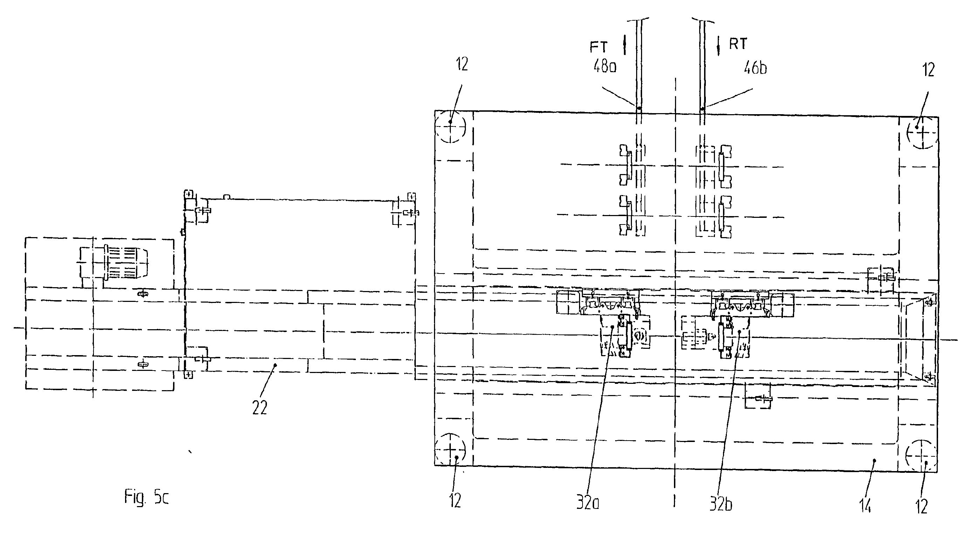

In Figur 5 a,b,c ist eine weitere Auführung der Werkzeugmaschine gezeigt, bei welcher vier Arbeitsspindeln 34 vorgesehen sind, um insbesondere die Nebenzeiten zu reduzieren. Im dargestellten Auführungsbeispiel ist die Bearbeitung von flanschartigen Werkstücken 50 in zwei Aufspannungen gezeigt.

Bei der in Figur 5 dargestellten Ausführung sind an der Unterseite des Ständeroberteils 14 zwei Y-Führungen 26a, 26b mit Y-Schlitten 28a, 28b vorgesehen. Unten an den Y-Schlitten 28a, 28b sind jeweils an Z-Führungen 30a bzw. 30b hängend Z-Schlitten 32a bzw. 32b geführt. Die Z-Schlitten 32a, 32b tragen jeweils einen Antriebsmotor 36a bzw. 36b sowie zwei parallel nebeneinander angeordnete, umschaltbar durch den jeweiligen Antriebsmotor 36a bzw. 36b antreibbare Arbeitsspindeln 34a1 und 34a2 bzw. 34b1 und 34b2. Den beiden Bearbeitungen ist jeweils ein X-Schlitten 40a bzw. 40b zugeordnet, der in dem dargestellten Beispiel einen Werkzeugträgerblock 52 aufnimmt.

Entsprechend der Anordnung von jeweils zwei Arbeitsspindeln an jedem Z-Schlitten 32a, 32b ist die Be- und Entladestation mit einer doppelten Übergabeposition ausgestattet. Die Werkstück-Rohteile werden über eine als Zulaufrinne ausgebildete Transportbahn 46b zugeführt und nach der Bearbeitung über eine als Ablaufrinne ausgebildete Transportbahn 48a weggefördert.

Die in Figur 5 gezeigte Werkzeugmaschine arbeitet in folgender Weise:
Über die Transportbahn 46b werden die Werkstück-Rohteile zugeführt, wobei jeweils zwei Werkstück-Rohteile in die Übergabeposition der Be- und Entladestation gelangen. Der Z-Schlitten 32b wird mittels des Z-Hubes und des Y-Hubes in die Beladeposition verfahren, wo die zwei Werkstück-Rohteile an den Arbeitsspindeln 34b1 und 34b2 gespannt werden. Anschließend wird der Z-Schlitten 32b in die in Figur 5b ausgezogen gezeichnete Position verfahren, in welcher sich die Arbeitsspindel 34b2 über dem Werkzeugträgerblock 52b des X-Schlittens 40b befindet. Der Antriebsmotor 36b treibt die Arbeitsspindel 34b2 an, und das an dieser Arbeitsspindel gespannte Werkstück 50 wird gedreht. Nach Beendigung der Drehbearbeitung wird der Y-Schlitten 28b weiterverfahren, so daß die zweite Arbeitsspindel 34b1 über den Werkzeugträgerblock 52b des X-Schlittens 40b gelangt. Diese Position ist in Figur 5b strichpunktiert angedeutet. In dieser Position wird das zweite an der Arbeitsspindel 34b1 gespannte Werkstück drehbearbeitet. Anschließend werden die Z-Schlitten 32a und 32b in Fluchtung gefahren und axial gegeneinander bewegt, so daß die zwei Werkstücke 50 von den Arbeitsspindeln 34b1 und 34b2 des Z-Schlittens 32b an die Arbeitsspindeln 34a1 und 34a2 des Z-Schlittens 32a übergeben werden können und dort in der entgegengesetzten zweiten Aufspannung gespannt werden. In entsprechender Weise erfolgt nun die Bearbeitung der beiden Werkstücke aufeinanderfolgend an den Arbeitsspindeln 34a1 und 34a2 durch den Werkzeugträgerblock 52a des X-Schlittens 40a. Ist die Drehbearbeitung beider Werkstücke in der zweiten Aufspannung beendet, wird der Z-Schlitten 32a in die Entladeposition verfahren und gibt die fertig bearbeiteten Werkstücke 50 an die abführende Transportbahn 48a ab.

In dieser Ausführung müssen die Z-Schlitten 32a und 32b nur einmal für jeweils zwei Werkstücke 50 in die Be- und Entladeposition verfahren werden, wodurch die Nebenzeiten reduziert werden.

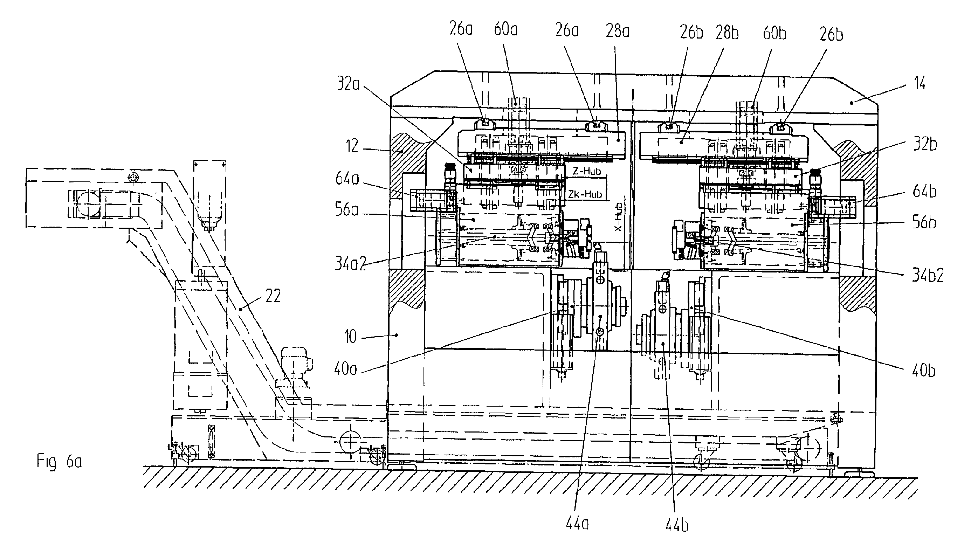

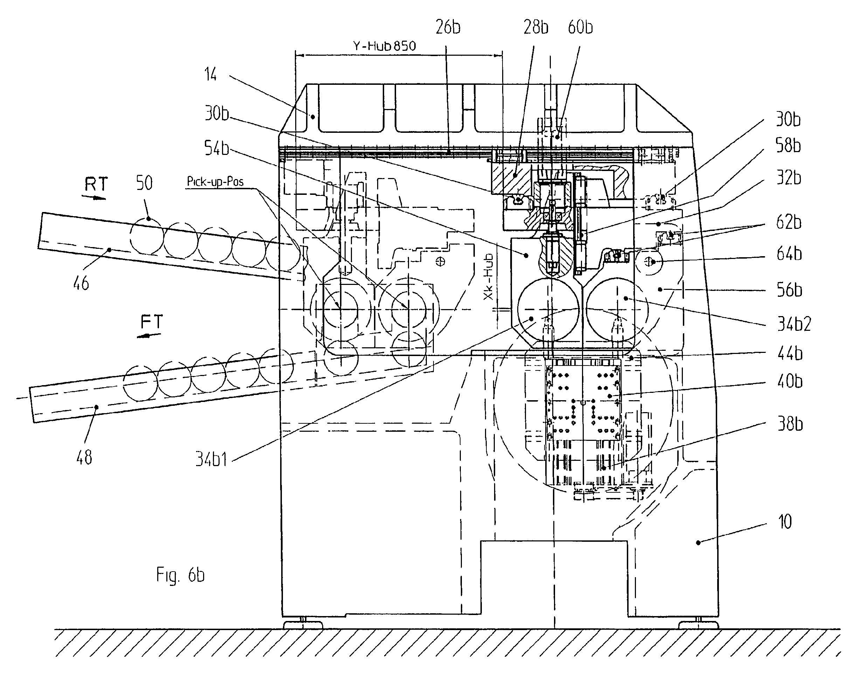

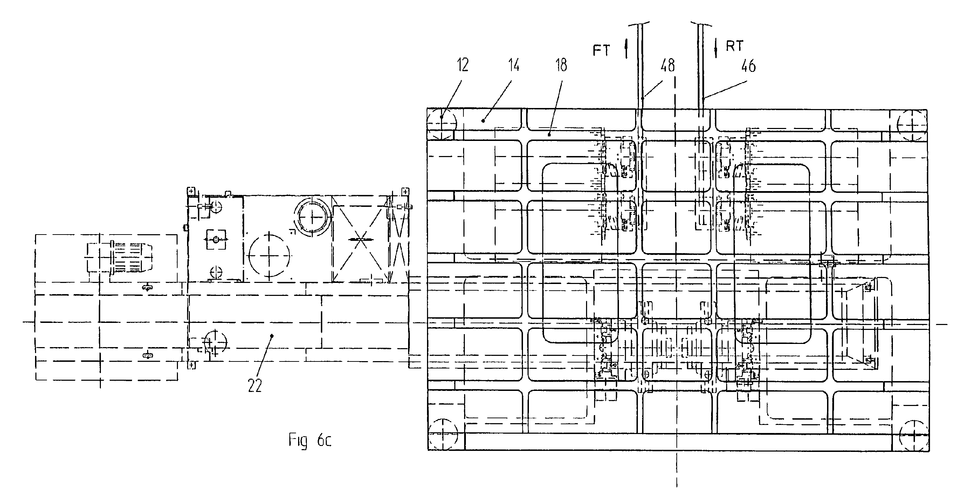

Die Figuren 6 a,b,c zeigen eine sechste Ausführung der Werkzeugmaschine mit vier Arbeitsspindeln, wobei jeweils zwei flanschartige Werkstücke gleichzeitig parallel in zwei Aufspannungen bearbeitet werden können.

An der Unterseite des Ständeroberteils 14 sind zwei Y-Führungen 26a, 26b mit Y-Schlitten 28a, 28b vorgesehen. Unten an den Y-Schlitten 28a, 28b ist jeweils an Z-Führungen 30a, 30b rechtwinklig zu den Y-Führungen 26a, 26b verfahrbar ein Z-Schlitten 32a, 32b angeordnet. An der Unterseite der Z-Schlitten 32a bzw. 32b sind jeweils nebeneinander ein X-Korrekturschlitten 54a bzw. 54b und ein Z-Korrekturschlitten 56a bzw. 56b angeordnet. In dem X-Korrekturschlitten 54a bzw. 54b ist eine erste Arbeitsspindel 34a1 bzw. 34b1 und in dem Z-Korrekturschlitten 56a bzw. 56b eine zweite Arbeitsspindel 34a2 bzw. 34b2 gelagert. Die beiden Arbeitsspindeln 34a1 und 34a2 bzw. 34b1 und 34b2 sind achsparallel und horizontal in Z-Richtung angeordnet. Der X-Korrekturschlitten 54a bzw. 54b ist an dem Z-Schlitten 32a bzw. 32b vertikal in X-Richtung verfahrbar geführt. Hierzu dienen X-Korrekturführungen 58a bzw. 58b, die vertikal an dem Z-Schlitten 32a bzw. 32b angeordnet sind und den X-Korrekturschlitten 54a bzw. 54b führen. Ein an dem Z-Schlitten 32a bzw. 32b angeordneter X-Korrekturantrieb 60a bzw. 60b dient zum Verfahren des X-Korrekturschlittens 54 in vertikaler X-Richtung gegenüber dem Z-Schlitten 32a bzw. 32b.

Der Z-Korrekturschlitten 56a bzw. 56b ist horizontal in Z-Richtung an dem Z-Schlitten 32a bzw. 32b gelagert. Hierzu dienen Z-Korrekturführungen 62a bzw. 62b, die an der Unterseite des Z-Schlittens 32a bzw. 32b angebracht sind und den Z-Korrekturschlitten 56a bzw. 56b führen. Ein an dem Z-Schlitten 32a bzw. 32b angebrachter Z-Korrekturantrieb 64a bzw. 64b dient zum Verfahren des Z-Korrekturschlittens 56a bzw. 56b gegenüber dem Z-Schlitten 32a bzw. 32b.

In dem Ständerunterteil 10 ist den Arbeitsspindeln 34a1 und 34a2 bzw. 34b1 und 34b2 zugeordnet jeweils ein vertikal verfahrbarer X-Schlitten 40a bzw. 40b angeordnet. Der X-Schlitten 40a bzw. 40b trägt einen Werkzeugrevolver 44a bzw. 44b mit horizontaler Drehachse. Der Werkzeugrevolver 44a bzw. 44b trägt in jeder Schaltstellung zwei Bearbeitungswerkzeuge, die parallel zueinander und in einem dem Abstand der Arbeitsspindeln 34a1 und 34a2 bzw. 34b1 und 34b2 entsprechenden Abstand nebeneinander angeordnet sind. In dem dargestellten Ausführungsbeispiel ist der Werkzeugrevolver 44a bzw. 44b im Wesentlichen quadratisch ausgebildet und weist vier Schaltstellungen auf, wobei an jeder Seite des Werkzeugrevolvers 44a bzw. 44b zwei Werkzeuge angeordnet sind.

Die Werkzeugmaschine der Figur 6 arbeitet in folgender Weise.

Zur Bearbeitung von flanschförmigen Werkstücken werden die Werkstück-Rohteile über eine als Zulaufrinne ausgebildete Transportbahn 46 in eine Übergabeposition der Be- und Entladestation zugeführt. In der Übergabeposition (Pick-up-Position) werden jeweils zwei Rohrteile achsparallel nebeneinander positioniert. Der Y-Schlitten 28b fährt in die Übergabeposition und nimmt diese zwei Rohrteile auf, die an den Arbeitsspindeln 34b1 und 34b2 in einer ersten Aufspannung gespannt werden. Der Y-Schlitten 28b fährt in die Bearbeitungsposition, in welcher die Werkstück-Rohrteile in Werkzeugen des Werkzeugrevolvers 44b zugeordnet sind. Nun erfolgt die Drehbearbeitung der Werkstücke gleichzeitig und parallel an den Arbeitsspindeln 34b1 und 34b2 durch die Werkzeuge des Werkzeugrevolvers 44b. Die Bearbeitung erfolgt dabei NC-gesteuert, wobei der Antrieb des Z-Schlittens 32b den Z-Hub und der Antrieb des X-Schlitttens 40b den X-Hub der Drehbearbeitung bewirken. Um unterschiedliche Schneideigenschaften des an der Arbeitsspindel 34a1 und des an der Arbeitsspindel 34a2 zum Einsatz kommeden Werkzeugs, z. B. in Folge unterschiedlichen Werkzeugsverschleißes auszugleichen, ist der X-Korrekturschlitten 54b und der Z-Korrekturschlitten 56b vorgesehen. Der Z-Hub für die Drehbarbeitung an der Arbeitsspindel 34b1 wird durch den Z-Schlitten 32b bestimmt. Für die Arbeitsspindel 34b2 kann dieser Z-Hub des Z-Schlittens 32b zusätzlich durch den Z-Korrekturschlitten 56b NC-gesteuert korrigiert werden. Der X-Hub für die Drehbearbeitung wird durch den X-Schlitten 40b für die Bearbeitung an der Arbeitsspindel 34b2 bestimmt. Für die Drehbarbeitung an der Arbeitsspindel 34b1 kann dieser durch den X-Schlitten 40b vorgegebene X-Hub zusätzlich durch den X-Korrekturschlitten 54b NC-gesteuert korrigiert werden. Auf diese Weise können Bearbeitungsabweichungen zwischen den beiden Arbeitsspindeln 34b1 und 34b2 sowohl in Richtung der Z-Achse als auch in der X-Achse korrigiert werden.

Nach Beendigung der Bearbeitung der Werkstücke in der Aufspannung an den Arbeitsspindeln 34b1 und 34b2 werden die Werkstücke an die Arbeitsspindeln 34a1 und 34a2 übergeben und dort gespannt. In dieser zweite Aufspannung werden die Werkstücke in entsprechender Weise von ihrer entgegengesetzten axialen Stirnseite her bearbeitet. Nach Beendigung der Bearbeitung in dieser zweiten Aufspannung werden die Werkstück-Fertigteile mittels des Y-Schlittens 28a in die Abgabeposition der Be- und Entladestation gefahren und dort auf die als Ablaufrinne ausgebildete Fertigteiltransportbahn 48 abgelegt.

Bei dieser sechsten Ausführung der Werkzeugmaschine werden pro Bearbeitungstakt jeweils zwei Werkstücke bearbeitet. Dadurch verdoppelt sich der Fertigteil-Ausstoß bzw. der Bearbeitungstakt pro Werkstück halbiert sich. Es ist auf diese Weise möglich, flanschartige Werkstücke, z. B. Laufringe für Wälzlager mit einem Takt von 8 bis 10 Sekunden pro Werkstück herzustellen.

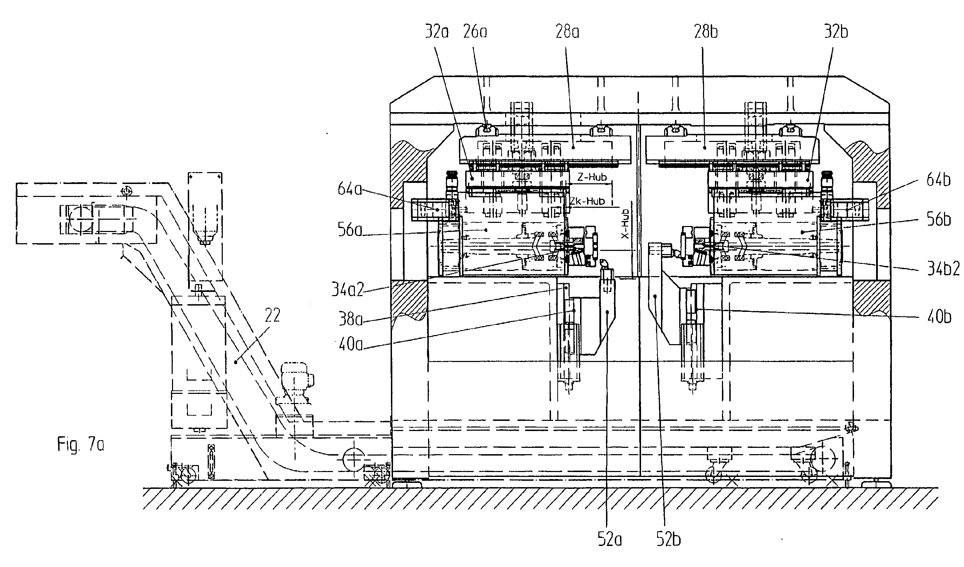

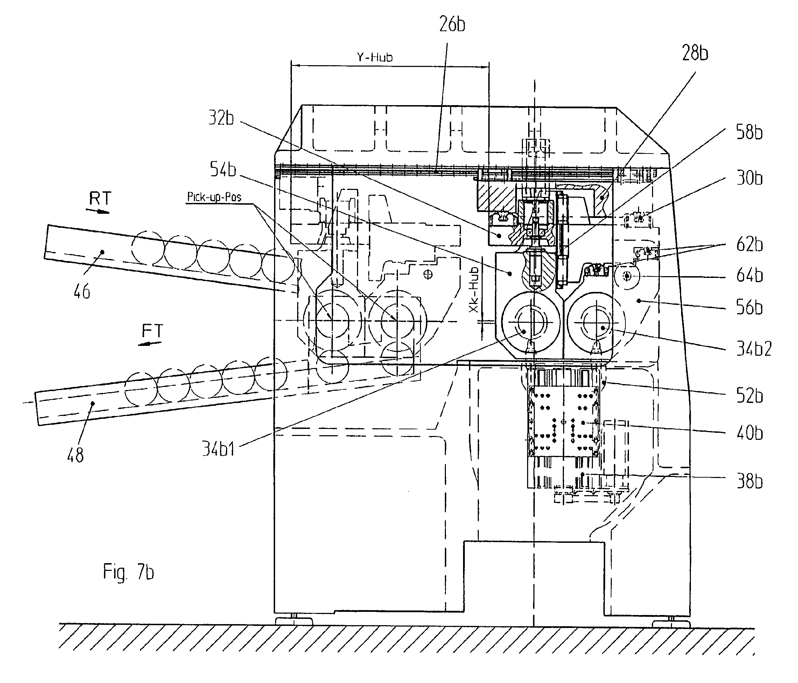

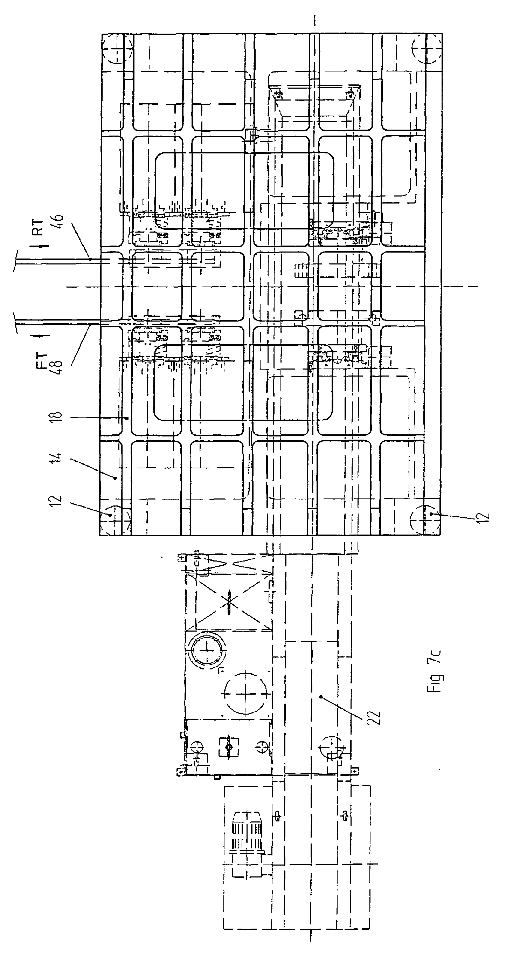

Die Figuren 7 a,b,c zeigen eine Abwandlung der Werkzeugmaschine der Figur 6. Die Ausführung der Figur 7 stimmt mit der Ausführung der Figur 6 weitgehend überein. Im Gegensatz zu dem Ausführungsbeispiel der Figur 6 ist jedoch an den X-Schlitten 40a und 40b an Stelle des Werkzeugrevolvers 44a bzw. 44b jeweils ein Werkzeugträgerblock 52a bzw. 52b angebracht. Die Bearbeitung erfolgt im Übrigen in der gleichen Weise, wie dies für das Ausführungsbeispiel der Figur 6 beschrieben ist.

Bei den vorstehenden Ausführungsbeispielen sind die Werkzeugmaschinen jeweils für eine Drehbearbeitung ausgelegt. Dementsprechend ist ein NC-gesteuerter Vorschub nur für die X-Achsen und die Z-Achsen vorgesehen. Der Y-Hub, der jeweils nur zwischen der Bearbeitungsposition und der Be- und Entladeposition erfolgt, kann mit einem einfachen Hydraulikantrieb zwischen Endanschlägen erfolgen.

Falls eine Komplettbearbeitung der Werkstücke 50 durchgeführt werden soll, kann auch der Y-Vorschub mit einer NC-Steuerung ausgestattet sein. Es können dann auch nicht-rotationssymmetrische Bearbeitungen durchgeführt werden.

Anstelle von Arbeitsspindeln 34 mit Werkstück-Spannmitteln für die Drehbearbeitung können die Arbeitsspindeln 34 auch als Bohrspindeln oder Frässpindeln ausgebildet sein. In diesem Falle ist der jeweils zugeordnete X-Schlitten für die Werkstückaufspannung ausgebildet. Weitere Kombinationsmöglichkeiten bekannter Baugruppen von Bearbeitungsmaschinen ergeben sich für den Fachmann in naheliegender Weise.

## Patentansprüche

1. Werkzeugmaschine, mit einem Maschinenständer, der vier Ständersäulen (12) und ein von den Ständersäulen (12) getragenes horizontales Ständeroberteil (14) aufweist, mit wenigstens einem an der Unterseite des Ständeroberteils (14) hängend horizontal geführten Y-Schlitten (28), mit wenigstens einem an der Unterseite des wenigstens einen Y-Schlittens (28) hängend horizontal geführten Z-Schlitten (32), mit wenigstens einer an dem wenigstens einen Z-Schlitten (32) hängend angeordneten horizontalen Arbeitsspindel (34) und mit wenigstens einem an einem Ständerunterteil (10) des Maschinenständers vertikal geführten X-Schlitten (40).

2. Werkzeugmaschine nach Anspruch 1, **dadurch gekennzeichnet, daß** die Y-Schlitten (28) und die Z-Schlitten (32) jeweils an Y-Führungen (26) bzw. Z-Führungen (30) hängend geführt sind, die als zugbelastbare Wälzlager-Profilschienenführungen ausgebildet sind.

3. Werkzeugmaschine nach Anspruch 1 oder 2, **dadurch gekennzeichnet, daß** die Z-Schlitten (32) unter 90° in Bezug auf die Führung der Y-Schlitten (28) geführt sind.

4. Werkzeugmaschine nach einem der vorhergehenden Ansprüche, **dadurch gekennzeichnet, daß** das Ständeroberteil (14) dachförmig ausgebildet ist und die gesamte Grundfläche des Maschinenständers überdeckt.

5. Werkzeugmaschine nach Anspruch 4, **dadurch gekennzeichnet daß** das Ständeroberteil (14) als ebene horizontale Platte (16) ausgebildet ist, an deren Oberseite Versteifungsrippen (18) angeformt sind und die mit den Ständersäulen (12) verschraubt ist.

6. Werkzeugmaschine nach einem der vorhergehenden Ansprüche, **dadurch gekennzeichnet, daß** die Bedienseite und die Be- und Entladeseite einander gegenüberliegende Seiten des Maschinenständers sind.

7. Werkzeugmaschine nach Anspruch 6, **dadurch gekennzeichnet, daß** die Versorgungsleitungen für den Antrieb der Schlitten (28, 32, 40) und die Antriebsmotoren (36) der Arbeitsspindeln (34) an den zu der Bedienseite senkrechten Seiten in den Maschinenständer geführt sind.

8. Werkzeugmaschine nach einem der vorhergehenden Ansprüche, **dadurch gekennzeichnet, daß** Transportbahnen (46, 48) zum Zuführen und Abführen der Werkstücke (50) zu einer Be- und Entladestation innerhalb des Maschinenständers führen und daß die Y-Schlitten (28) zwischen dieser Be- und Entladestation und dem Arbeitsraum verfahrbar sind, um die Werkstücke (50) in der Be- und Entladestation aufzunehmen und abzugeben.

9. Werkzeugmaschine nach einem der Ansprüche 1 bis 8, **dadurch gekennzeichnet, daß** zur Drehbearbeitung der Werkstücke (50) die Z-Schlitten (32) und die X-Schlitten (40) NC-gesteuert verfahrbar sind und daß die Y-Schlitten (28) fluiddruck-angetrieben zwischen der Bearbeitungsposition und der Be- und Entladeposition entsprechenden Endlagen verfahrbar sind.

10. Werkzeugmaschine nach einem der Ansprüche 1 bis 8, **dadurch gekennzeichnet, daß** zur Komplettbearbeitung der Werkstücke (50) die Z-Schlitten (32), die Y-Schlitten (28) und die X-Schlitten (40) NC-gesteuert verfahrbar sind.

11. Werkzeugmaschine nach einem der Ansprüche 1 bis 10, **dadurch gekennzeichnet, daß** zur Drehbearbeitung von wellenförmigen Werkstücken (50) an dem Z-Schlitten (32) der Arbeitsspindel (34) gegenüber und mit dieser axial fluchtend ein Reitstock (42) und im Bedarfsfall wenigstens eine Lünette angeordnet sind.

12. Werkzeugmaschine nach einem der Ansprüche 1 bis 10, **dadurch gekennzeichnet, daß** zur Drehbearbeitung von flanschförmigen Werkstücken (50) die Arbeitsspindel (34) mit Werkstück-Spannmitteln ausgestattet ist.

13. Werkzeugmaschine nach Anspruch 12, **dadurch gekennzeichnet, daß** zwei Z-Schlitten (32a, 32b) mit jeweils wenigstens einer Arbeitsspindel (34a, 34b) vorgesehen sind, daß die Arbeitsspindeln (34a, 34b) mit parallelen Achsen und mit gegeneinander gerichteten Spannmittel angeordnet sind und daß jedem Z-Schlitten (32a, 32b) ein X-Schlitten (40a, 40b) zugeordnet ist.

14. Werkzeugmaschine nach Anspruch 13, **dadurch gekennzeichnet, daß** die zwei Z-Schlitten (32a, 32b) an einem gemeinsamen Y-Schlitten (28) geführt sind.

15. Werkzeugmaschine nach Anspruch 13, **dadurch gekennzeichnet, daß** jeder der zwei Z-Schlitten (32a, 32b) an einem gesonderten Y-Schlitten (28a bzw. 28b) geführt ist, wobei die Y-Schlitten (28a, 28b) parallel und voneinander beabstandet geführt sind.

16. Werkzeugmaschine nach einem der vorhergehenden Ansprüche, **dadurch gekennzeichnet, daß** an wenigstens einem Z-Schlitten (32) wenigstens zwei Arbeitsspindeln (34a1, 34a2; 34b1, 34b2) achsparallel nebeneinander angeordnet sind, daß den wenigstens zwei Arbeitsspindeln (34a1, 34a2; 34b1, 34b2) jeweils ein X-Schlitten (40a; 40b) zugeordnet ist, der eine der Anzahl der Arbeitsspindeln (34a1, 34a2; 34b1, 34b2) entsprechende Anzahl von jeweils gleichzeitig zum Einsatz kommenden Werkzeugen trägt, und daß der Relativbewegungshub zwischen den Arbeitsspindeln (34a1, 34a2; 34b1, 34b2) und den Werkzeugen in Richtung der Z-Achse und/oder der X-Achse gesteuert korrigierbar ist.

17. Werkzeugmaschine nach Anspruch 16, **dadurch gekennzeichnet, daß** die wenigstens zwei Arbeitsspindeln (34a1 bzw. 34a2; 34b1 bzw. 34b2) jeweils in gesonderten Korrekturschlitten (54a, 54b, 56a, 56b) gelagert sind, die in Richtung der X-Achse und/oder in Richtung der Z-Achse geführt an dem Z-Schlitten (32a, 32b) angeordnet sind.

18. Werkzeugmaschine nach Anspruch 17, **dadurch gekennzeichnet, daß** an wenigstens einem Z-Schlitten (32a, 32b) zwei Arbeitsspindeln (34a1, 34a2; 34b1, 34b2) angeordnet sind, wobei die eine Arbeitsspindel (34a1; 34b1) in einem X-Korrekturschlitten (54a, 54b) gelagert ist, der in vertikalen X-Korrekturführungen (58a, 58b) an dem Z-Schlitten (32a, 32b) geführt ist, und die andere Arbeitsspindel (34a2, 34b2) in einem Z-Korrekturschlitten (56a, 56b) gelagert ist, der in horizontalen Z-Korrekturführungen (62a, 62b) an dem Z-Schlitten (32a, 32b) geführt ist.

19. Werkzeugmaschine nach einem der vorhergehenden Ansprüche, **dadurch gekennzeichnet, daß** der wenigstens eine X-Schlitten (40) einen Werkzeugrevolver (44) trägt.

20. Werkzeugmaschine nach einem der Ansprüche 1 bis 10, **dadurch gekennzeichnet, daß** die wenigstens eine Arbeitsspindel (34) eine Bohrspindel oder eine Frässpindel ist und daß der wenigstens eine X-Schlitten (40) Werkstück-Spannmittel aufweist.

## Claims

1. Machine tool, with a machine tool table which has four table columns (12) and a horizontal column upper part (14) borne by the table columns (12), with at least one horizontally guided Y-carriage suspended on the underside of the table upper part (14), with at least one horizontally guided Z-carriage (32) suspended on the underside of the at least one Y-carriage (28), with at least one horizontally guided Y-carriage (32) suspended on the underside of the at least one Y-carriage (28), with at least one horizontal work spindle arranged so that it is suspended on the at least one Z-carriage (32) and with at least one X-carriage (40) guided vertically on a table lower part (10) of the machine tool table.

2. Machine tool according to Claim 1, **characterised in that** the Y-carriages (28) and the Z-carriages (32) are each guided suspended in Y-guides (26) respectively Z-guides (30), which guides take the form of roller bearing profile rail guides which can be subjected to tensile loads.

3. Machine tool according to Claim 1 or 2, **characterised in that** the Z-carriages (32) are guided at 90° to the guide of the Y-carriages (28).

4. Machine tool according to one of the preceding claims, **characterised in that** the upper part of the table (21) is rooflike and covers the whole of the base area of the machine tool table.

5. Machine tool according to Claim 4, **characterised in that** the upper part of the machine tool table (14) forms an even, horizontal plate (16), on whose upper side stiffening ribs (18) are formed and which is screwed to the machine tool table columns (12).

6. Machine tool according to one of the preceding claims, **characterised in that** the operating side and the loading and unloading side are sides of the machine tool table which oppose one another.

7. Machine tool according to Claim 6, **characterised in that** the supply lines for the drive for the carriages (28, 32, 40) and the drive motors (36) for the work spindles (34) lead on the sides vertical to the operating side into the machine tool table.

8. Machine tool according to one of the preceding claims, **characterised in that** transport tracks (46, 48) for the supply and removal of the workpieces (50) lead to a loading and unloading station within the machine tool table and **in that** the Y-carriages (28) can be moved between this loading and unloading station and the working area in order to take up and release the workpieces (50) in the loading and unloading station.

9. Machine tool according to one of the claims 1 to 8, **characterised in that** to turn-machine the workpieces (50) the Z-carriages (32) and the X-carriages (40) can be NC-controlled to move and **in that** the Y-carriages (28) can be driven by fluid pressure to move between the end positions corresponding to the machining position and to the loading and unloading position.

10. Machine tool according to one of the claims 1 to 8, **characterised in that** to complete machining of the workpieces (50) the Z-carriages (32), the Y-carriages (28) and the X-carriages (40) can be numerically controlled to move.

11. Machine tool according to one of claims 1 to 10, **characterised in that** to turn-machine corrugated workpieces (50) a tailstock (42) and if necessary at least one rest are arranged at the Z-carriage (32) opposite the work spindle (34) opposite and is axially flush axially with this spindle.

12. Machine tool according to one of Claims 1 to 10 **characterised in that** to turn-machine flange-shaped workpieces (50) the work spindle (34) is equipped with work clamping equipment.

13. Machine tool according to Claim 12, **characterised in that** two Z-carriages (32a, 32b) are each provided with at least one work spindle (34a, 34b), that the work spindles (34a, 34b) are arranged with parallel axes and with clamping equipment oriented opposite one another and that an X-carriage (40a, 40b) is allocated to each Z-carriage (32a, 32b).

14. Machine tool according to Claim 13, **characterised in that** the two Z-carriages (32a, 32b) lead to a common Y-carriage (28).

15. Machine tool according to Claim 13, **characterised in that** each of the two Z-carriages (32a, 32b) are led to a separate Y-carriage (28a or 28b), the Y-carriages (28a, 28b) being led parallel to and at a distance from one another.

16. Machine tool according to one of the preceding claims, **characterised in that** at least two work spindles (34a1, 34a2, 34b1, 34b2) are arranged axis parallel next t one another at at least one Z-carriage (32), that respectively one X-carriage (40a, 40b) is allocated to the at least two work spindles (34a1, 34a2, 34b1, 34b2), which X-carriage carries a number of tools coming into use simultaneously corresponding to the number of work spindles (34a1, 34a2, 34b1, 34b2), and that the relative movement stroke between the work spindles (34a1, 34a2, 34b1, 34b2) and the tools can be corrected in a controlled manner in the direction of the Z-axis and/or the X-axis.

17. Machine tool according to Claim 16, **characterised in that** the at least two work spindles (34a1 respectively 34a2, 34b1 respectively 34b2) are each supported in separate correction carriages (54a, 54b, 56a, 56b), which are arranged in the direction of the X-axis and/or in the direction of the Z-axis at the Z-carriage (32a, 32b).

18. Machine tool according to Claim 17, **characterised in that** two work spindles (34a1, 34a2, 34b1, 34b2) are arranged at least one Z-carriage (32a, 32b), one work spindle (34a1, 34b1) being supported in an X-correction carriage (54a, 54b), which runs in vertical X-correction guides (58a, 58b) at the Z-carriage (32a, 32b), and the other work spindle (34a2, 34b2) is supported in a Z-correction carriage (56a, 56b), which runs in horizontal Z-correction guides (62a, 62b) at the Z-carriage (32a, 32b).

19. Machine tool according to one of the preceding claims, **characterised in that** the at least one X-carriage (40) carries a tool revolver (44).

20. Machine tool according to one of Claims 1 to 10, **characterised in that** the at least one work spindle (34) is a drilling spindle or a milling spindle and **in that** the at least one X-carriage (40) possesses work clamping equipment.

## Revendications

1. Machine-outil, avec un bâti de machine, qui comprend quatre colonnes de bâti (12) et une partie supérieure horizontale (14) du bâti portée par les colonnes de bâti (12), avec au moins un chariot Y (28) guidé horizontalement en suspension sur la face inférieure de la partie supérieure de bâti (14), avec au moins un chariot Z (32) guidé horizontalement en suspension sur la face inférieure du chariot Y (28), avec au moins une broche de travail horizontale (34) disposée en suspension sur le chariot Z (32), et avec au moins un chariot X (40) guidé verticalement sur une partie inférieure de bâti (10) du bâti de machine.

2. Machine-outil selon la revendication 1,
**caractérisée en ce que**
les chariots Y (28) et les chariots Z (32) sont guidés en suspension respectivement sur des guides Y (26) ou des guides Z (30), réalisés sous la forme de guides en rails profilés à paliers de roulement pouvant être chargés en traction.

3. Machine-outil selon la revendication 1 ou 2,
**caractérisée en ce que**
les chariots Z (32) sont guidés à 90° par rapport au guide des chariots Y (28).

4. Machine-outil selon l'une quelconque des revendications précédentes,
**caractérisée en ce que**
la partie supérieure de bâti (14) est réalisée en forme de toit et recouvre toute la surface au sol du bâti de machine.

5. Machine-outil selon la revendication 4,
**caractérisée en ce que**
la partie supérieure de bâti (14) est réalisée sous la forme d'une plaque horizontale plane (16), dont le côté supérieur comporte des nervures de raidissement (18), et boulonnée sur les colonnes de bâti (12).

6. Machine-outil selon l'une quelconque des revendications précédentes,
**caractérisée en ce que**
le côté de commande et le côté de chargement et de déchargement sont des côtés opposés l'un à l'autre du bâti de machine.

7. Machine-outil selon la revendication 6,
**caractérisée en ce que**
les conduites d'alimentation pour l'entraînement des chariots (28, 32, 40) et les moteurs d'entraînement (36) des broches de travail (34) sont menées dans le bâti de machine sur les côtés perpendiculaires au côté de commande.

8. Machine-outil selon l'une quelconque des revendications précédentes,
**caractérisée en ce que**
des chemins de transport (46, 48) pour l'amenée et l'évacuation des pièces (50) conduisent à une station de chargement et de déchargement à l'intérieur du bâti de machine, et les chariots Y (28) se déplacent entre cette station de chargement et de déchargement et le lieu de travail, pour recevoir et céder les pièces (50) dans la station de chargement et de déchargement.

9. Machine-outil selon l'une quelconque des revendications 1 à 8,
**caractérisée en ce que**
les chariots Z (32) et les chariots X (40) sont déplaçables par commande numérique (CN) pour le tournage des pièces (50), et les chariots Y (28) sont déplaçables par entraînement par pression de fluide entre des positions d'extrémité correspondant à la position d'usinage et la position de chargement et de déchargement.

10. Machine-outil selon l'une quelconque des revendications 1 à 8,
**caractérisée en ce que**
les chariots Z (32), les chariots Y (28) et les chariots X (40) sont déplaçables par commande numérique pour l'usinage complet des pièces (50).

11. Machine-outil selon l'une quelconque des revendications 1 à 10,
**caractérisée en ce qu'**
une poupée mobile (42) et si nécessaire au moins une lunette sont disposées sur le chariot Z (32), en face de la broche de travail (34) et en alignement avec celle-ci, pour le tournage de pièces ondulées (50).

12. Machine-outil selon l'une quelconque des revendications 1 à 10,
**caractérisée en ce que**
la broche de travail (34) est équipée de moyens de serrage de pièce pour le tournage de pièces en forme de brides (50).

13. Machine-outil selon la revendication 12,
**caractérisée en ce que**
deux chariots Z (32a, 32b) comportent chacun au moins une broche de travail (34a, 34b), les broches de travail (34a, 34b) sont disposées avec les axes parallèles et avec des moyens de serrage orientés l'un vers l'autre, et un chariot X (40a, 40b) est associé à chaque chariot Z (32a, 32b).

14. Machine-outil selon la revendication 13,
**caractérisée en ce que**
les deux chariots Z (32a, 32b) sont guidés sur un chariot Y (28) commun.

15. Machine-outil selon la revendication 13,
**caractérisée en ce que**
chacun des deux chariots Z (32a, 32b) est guidé sur un chariot Y distinct (28a ou 28b), et les chariots Y (28a, 28b) sont guidés parallèlement et à distance l'un de l'autre.

16. Machine-outil selon l'une quelconque des revendications précédentes,
**caractérisée en ce qu'**
au moins deux broches de travail (34a1, 34a2; 34b1, 34b2) sont disposées l'une à côté de l'autre avec leurs axes parallèles, un chariot X (40a; 40b) est respectivement associé à au moins deux broches de travail (34a1, 34a2; 34b1, 34b2) et porte un nombre d'outils à utiliser simultanément correspondant au nombre des broches de travail (34a1, 34a2; 34b1, 34b2), et la course de déplacement relatif entre les broches de travail (34a1, 34a2; 34b1, 34b2) et les outils en direction de l'axe Z et/ou de l'axe X peut être corrigée de façon commandée.

17. Machine-outil selon la revendication 16,
**caractérisée en ce qu'**
au moins deux broches de travail (34a1 ou 34a2; 34b1 ou 34b2) sont montées chacune dans des chariots de correction distincts (54a, 54b, 56a, 56b), disposés sur le chariot Z (32a, 32b) et guidés dans la direction de l'axe X et/ou dans la direction de l'axe Z.

18. Machine-outil selon la revendication 17,
**caractérisée en ce que**
deux broches de travail (34a1, 34a2; 34b1, 34b2) sont disposées sur au moins un chariot Z (32a, 32b), dont une première broche de travail (34a1; 34b1) est montée dans un chariot de correction X (54a, 54b) guidé dans des guides de correction X verticaux (58a, 58b) sur le chariot Z (32a, 32b), et l'autre broche de travail (34a2; 34b2) est montée dans un chariot de correction Z (56a, 56b), guidé dans des guides de correction Z horizontaux (62a, 62b) sur le chariot Z (32a, 32b).

19. Machine-outil selon l'une quelconque des revendications précédentes,
**caractérisée en ce qu'**
au moins un chariot X (40) porte une tourelle d'outils (44).

20. Machine-outil selon l'une quelconque des revendications 1 à 10,
**caractérisée en ce qu'**
au moins une broche de travail (34) est une broche d'alésage ou une broche de fraisage, et au moins un chariot X (40) présente des moyens de serrage de pièce.
